# DEMANDE DE BREVET EUROPEEN

(11) **EP 2 612 799 A1**
(43) Date de publication de la demande: **10.07.2013**
(21) Numéro de dépôt: 12290465.9
(22) Date de dépôt: 26.12.2012
(51) Int. Cl.: B62B 3/04, B66F 7/22

(54) **Dispositif de chargement latéral par basculement adaptable sur enfin mobile de manutention**

(30) Priorité: 03.01.2012 FR 1250045
(71) Demandeur: Derex, Gerard, 24200 Sarlat (FR)
(72) Inventeur: Derex, Gerard, 24200 Sarlat (FR)

(57) **Abrégé**

L'objet de l'invention est un dispositif de chargement latéral par basculement d'une charge lourde compacte, adaptable sur un engin (10) mobile de manutention comprenant une base (12) et un plateau (14), caractérisé en ce qu'il comprend une platine (22) apte à être rapportée sur le plateau (14), cette platine (22) recevant au droit du bord latéral du plateau (14), du côté A du chargement de la charge, un basculeur (26) qui comporte un siège (28), de forme en L, monté pivotant autour d'un axe X-X', parallèle à l'axe longitudinal et de déplacement de l'engin (10) mobile de manutention et monté solidaire d'un axe (30), ce siège pouvant prendre deux positions extrêmes :
- la première position dite de déplacement, dans laquelle la branche longue du L se trouve verticale,
- la seconde position dite de chargement dans laquelle la branche longue du L se trouve horizontale, dans le prolongement du plan du plateau (14).

## Description

La présente invention concerne un dispositif de chargement latéral par basculement, adaptable sur un engin mobile de manutention.

On connaît des engins mobiles de manutention, conçus pour permettre le transfert de charges compactes et lourdes, comme des coffres forts, des pianos, des moteurs électriques de forte puissance.

Ces charges compactes doivent souvent être manutentionnées dans des lieux exigus et en étage, ce qui pose de nombreux problèmes supplémentaires.

Ce type de chariot, notamment commercialisé sous la marque déposée Pianoplan^{®}, comporte une base montée sur des chenilles qui autorisent le déplacement de l'engin avec des pivotements sur place mais qui autorisent aussi la descente d'escaliers.

La base est surmontée d'un plateau support apte à recevoir la charge et muni de fonctions complémentaires. Ce plateau est inclinable afin de compenser l'angle de descente par exemple et peut être translaté pour compenser le décalage du centre de gravité lors de la descente d'escaliers par exemple.

De plus, l'ensemble du chariot est équipé d'un pied élévateur escamotable, lui-même monté sur rouleaux afin de réaliser des pivotements par rotation sur place par exemple et de venir chercher une charge en hauteur, quelques dizaines de centimètres pour donner un ordre d'idées.

Si ce type d'engins mobiles de manutention est particulièrement intéressant pour le déplacement de ladite charge, il n'en reste pas moins qu'il faut positionner la charge sur ledit engin.

On comprend que ce type d'engin permet de s'affranchir d'un personnel trop important pour le déplacement mais on comprend aussi qu'il faut beaucoup de personnels pour assurer la mise en place de la charge sur ledit engin.

De fait, le bénéfice reste limité.

La présente invention vise à proposer un dispositif de chargement latéral par basculement, adaptable sur un tel engin mobile de manutention.

La description qui est effectuée ci-après vise le chargement d'un piano, plus particulièrement un piano à queue car c'est le plus délicat, sur un engin mobile de manutention de charges compactes lourdes, mais le dispositif de chargement selon la présente invention trouve application pour toute autre charge lourde et compacte de ce type.

Ce dispositif de chargement latéral par basculement permet de s'affranchir d'un grand nombre d'opérateurs puisqu'il n'en nécessite qu'un seul.

Le dispositif selon la présente invention est maintenant décrit en détail suivant un mode de réalisation particulier, non limitatif, en regard des dessins annexés, dessins sur lesquels les différentes figures représentent :
- Figure 1 : une vue schématique d'un engin mobile de manutention de charges lourdes,
- Figure 2 : une vue schématique en perspective du dispositif de chargement latéral, par basculement, selon la présente invention,
- Figure 3 : une vue schématique du dispositif monté sur le plateau de l'engin mobile de manutention de charge lourde,
- Figures 4 : un synoptique des phases de chargement.

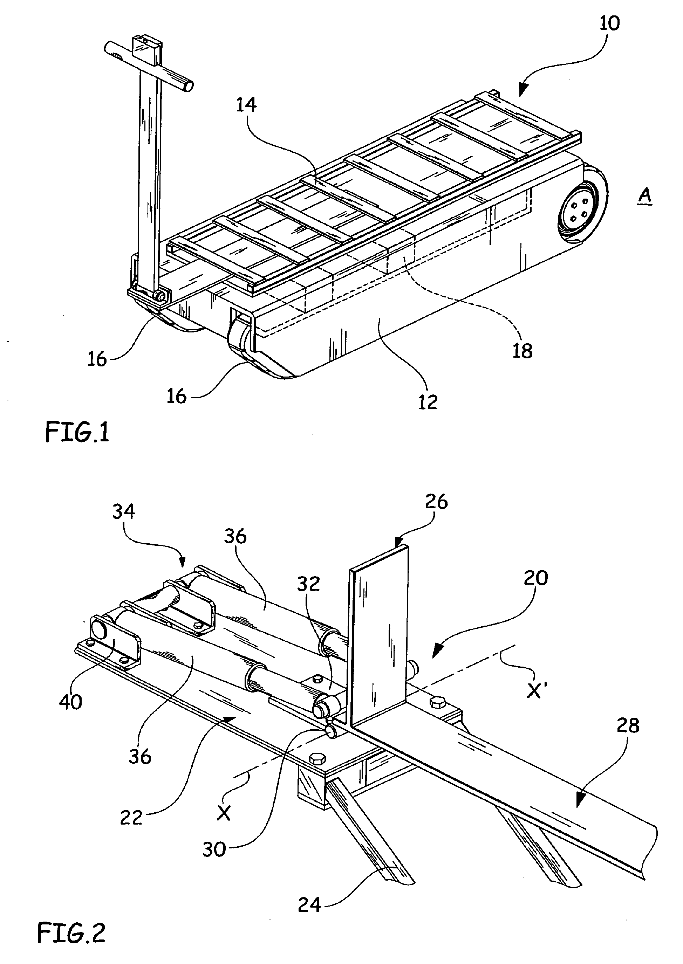

Sur la figure 1, on a représenté un engin 10 mobile de manutention de charge compacte lourde. Cet engin est disponible dans le commerce.

Cet engin comporte une base 12 et un plateau 14.

La base 12 est équipée de moteurs (non représentés), généralement des moteurs électriques mais qui peuvent être hydrauliques, alimentés à partir d'une centrale hydraulique. Ces moteurs sont utilisés pour l'entraînement d'une paire de chenilles 16 qui assurent la mobilité de l'engin, avec une continuité de la zone d'appui au sol et une possibilité de rotation autour de l'une desdites chenilles en point fixe, ceci de façon bien connue.

Des batteries 18 assurent l'alimentation en énergie électrique.

Ces éléments, de poids élevé, sont disposés en partie inférieure de la base, ce qui confère à l'engin un centre de gravité situé très bas et donc une grande stabilité.

Le plateau 14 est supporté par des glissières de façon à pouvoir être translaté longitudinalement afin de modifier le point d'application du centre de gravité de la charge. La translation est obtenue au moyen de vérins, électriques ou hydrauliques, suivant l'agencement et la puissance nécessaire.

Ce plateau 14 est une plaque métallique épaisse destinée à recevoir la charge, solidarisée auxdites glissières.

Sur la figure 2, on a représenté le dispositif 20 de chargement latéral par basculement.

Ce dispositif 20 de chargement latéral par basculement comprend une platine 22 apte à être rapportée sur le plateau 14, de préférence d'une façon définitive, par exemple par soudage. En effet, cette platine 22 vient simplement en surépaisseur sur le plateau 14 et y reste à demeure.

Sur cette platine 22, il est rapporté une paire de jambages 24. Ces jambages sont montés de façon amovible sur la plateau 14 par exemple par clavetage.

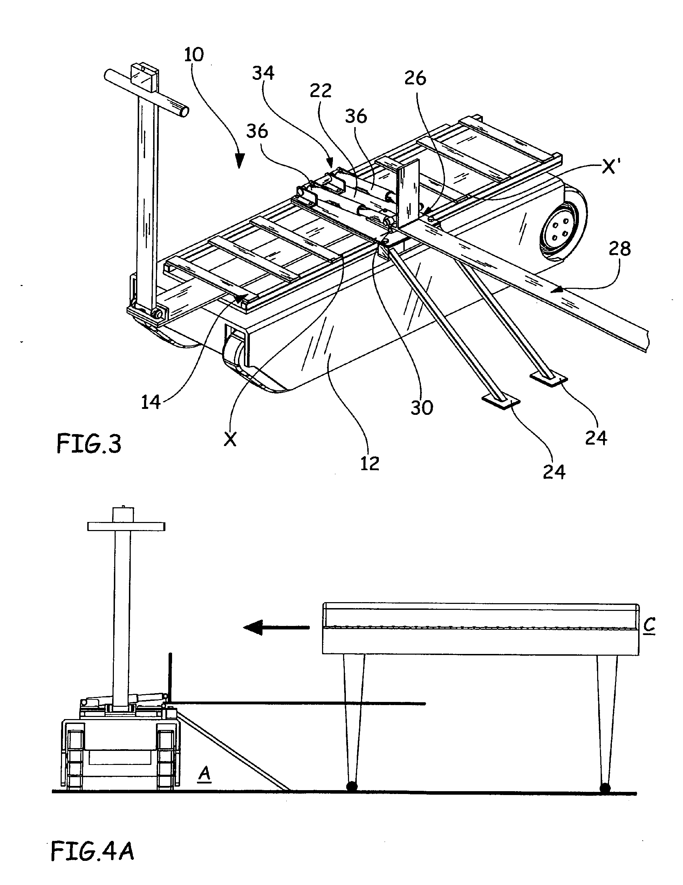

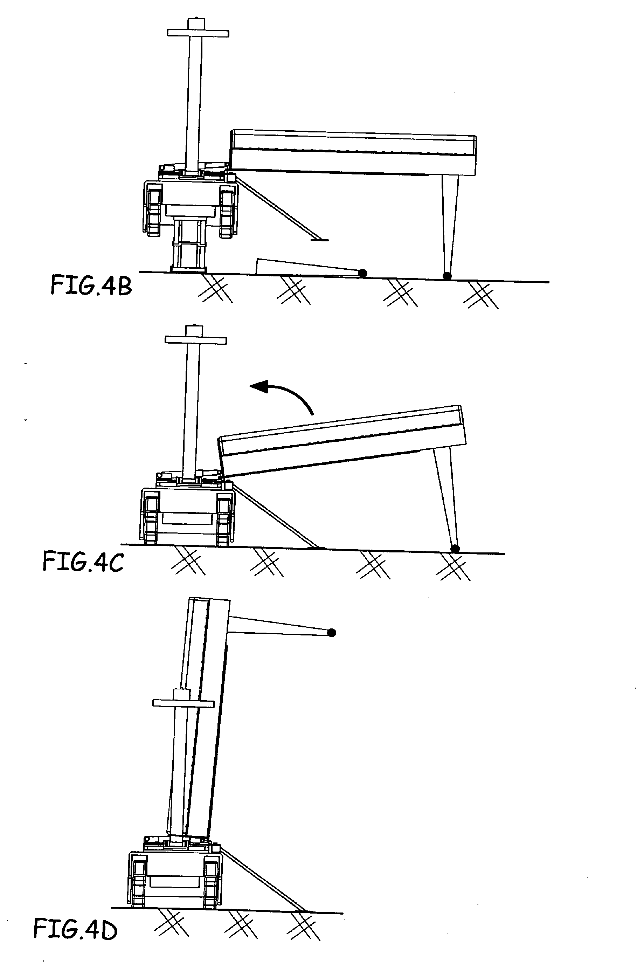

Ces jambages ont une longueur et un angle d'inclinaison fixes et se prolongent en déport, du côté A du chargement de la charge C sur le plateau 14 de l'engin mobile de manutention, visible notamment sur les figures 4.

La platine 22 reçoit au droit du bord latéral du plateau 14, du côté du chargement de la charge, un basculeur 26. Ce basculeur comporte un siège 28, de forme en L, monté pivotant autour d'un axe X-X', parallèle à l'axe longitudinal et de déplacement de l'engin mobile de manutention. Ce siège 28 est monté solidaire d'un axe 30 mobile en rotation dans une pièce 32 amovible, rapportée sur la platine par boulonnage par exemple, de façon à la rendre démontable.

Ce siège 28 peut prendre deux positions extrêmes :
- la première position dite de déplacement, dans laquelle la branche longue du L se trouve verticale, s'étendant au droit du bord latéral A du plateau 14 tandis que la branche courte se trouve en appui sur la surface de la platine 22,
- la seconde position dite de chargement dans laquelle la branche longue du L se trouve horizontale, dans le prolongement du plan du plateau 14.

Le siège 28 peut prendre toutes les positions intermédiaires entre ces deux positions extrêmes.

Le siège 28 est équipé de moyens 34 de manoeuvre afin de le faire passer de la première position vers la seconde position et inversement de la seconde position vers la première position, ceci à vide ou avec la charge C positionnée dans le siège.

Ces moyens 34 de manoeuvre prennent la forme d'au moins un vérin 36, dont le corps 38 est solidaire de la platine, par exemple articulé dans une chape 40, et dont la tête 42 de tige est solidaire, de façon articulée, du L, en un point situé sous la branche courte comme cela est bien montré sur la figure 2.

En l'occurrence, le dispositif selon la présente invention comprend des moyens 34 de manoeuvre à 2 vérins.

Chaque chape 40 est montée par boulonnage sur la platine 22 de façon à la rendre amovible également tout comme la pièce 32.

Ainsi, si la platine 22 est solidarisée de façon fixe au plateau 14, il est possible de retirer les éléments associés à ladite platine pour ne laisser subsister que la platine, notamment lorsque l'engin 10 mobile ne nécessite pas le recours au dispositif de chargement par basculement latéral selon la présente invention.

La mise en oeuvre du dispositif 20 de chargement par basculement latéral selon la présente invention va maintenant être décrite.

La platine 22 ayant été rapportée sur la plaque 14, les vérins 36 des moyens 34 de manoeuvre étant alimentés en énergie, l'engin 10 mobile de manutention est positionné latéralement à la charge C, en l'occurrence un piano à queue, figure 1. Ainsi que décrit ci-avant l'engin 10 mobile de manutention est équipé de moyens d'élévation, ce qui permet de le mettre au niveau du piano de sorte que la branche longue du L du siège 28 vienne à un niveau juste sous le piano.

Le piano est déplacé en translation pour venir au-dessus de ladite branche longue.

Les jambages 24 sont mis en place afin d'assurer une stabilité parfaite de l'ensemble.

Une fois le piano en appui sur cette branche par exemple en remontant un peu plus l'engin 10 mobile, il est possible de démonter un pied comme montré sur la figure 4B.

Le piano peut être sécurisé au siège 28 par tout moyen adapté, comme des sangles ou des serre-joints.

Sur la figure 4C, les moyens 34 de manoeuvre sont mis en service et les vérins 36 associés assurent une traction sur la branche courte du siège 28, provoquant sa rotation autour de l'axe X-X'. La charge C, en l'occurrence le piano est entraîné en basculement pour se retrouver dans la position extrême de la figure 4D.

Le piano n'est pas totalement verticalisé de sorte à permettre son maintien par son propre poids sans qu'il ne bascule du côté opposé.

Le couple exercé par le piano se trouve alors largement compensé par le poids de l'engin 10 mobile qui peut à son tour être déplacé avec sa charge, sans risque de renversement et sans que le piano ne subisse de déformation.

Si nécessaire bien entendu, en fonction de l'exiguïté des lieux, les autres pieds peuvent être démontés.

En complément, il est possible d'adjoindre au dispositif 20 de basculement selon la présente invention, un complément sous forme de deux sièges supplémentaires de part et d'autre du basculeur 26, également pivotants et montés libres en pivotement de façon totalement homothétique à celle du siège 28.

Ces sièges prennent la forme de L également mais avec des branches de longueur quasiment égales, ces sièges supplémentaires venant uniquement comme stabilisateur de la charge C dans le sens longitudinal.

Ces sièges supplémentaires ne comportent aucun moyen de manoeuvre associé, ils sont libres et suivent le mouvement de la charge, imprimé par le dispositif de basculement selon la présente invention.

La décharge de la charge C de l'engin 10 mobile s'effectue par la réalisation des mêmes étapes en sens inverse.

Il est possible de tarer les vérins 36 des moyens 34 de manoeuvre pour que la descente s'effectue lentement par simple écoulement du fluide hydraulique des vérins lorsque ceux-ci sont de type hydraulique.

On constate qu'un opérateur peut à lui tout seul assurer le déplacement d'une charge lourde compacte grâce au dispositif de chargement latéral par basculement selon la présente invention.

## Revendications

1. Dispositif de chargement latéral par basculement d'une charge lourde compacte C, adaptable sur un engin (10) mobile de manutention comprenant une base (12) et un plateau (14), **caractérisé en ce qu'**il comprend une platine (22) apte à être rapportée sur le plateau (14), cette platine (22) recevant, au droit du bord latéral du plateau (14), du côté A du chargement de la charge C, un basculeur (26) qui comporte un siège (28), de forme en L, monté pivotant autour d'un axe X-X', parallèle à l'axe longitudinal et de déplacement de l'engin (10) mobile de manutention et monté solidaire d'un axe (30), ce siège pouvant prendre deux positions extrêmes :
- la première position dite de déplacement, dans laquelle la branche longue du L se trouve verticale, s'étendant au droit du bord latéral du plateau (14) tandis que la branche courte se trouve en appui sur la surface de la platine (22),
- la seconde position dite de chargement dans laquelle la branche longue du L se trouve horizontale, dans le prolongement du plan du plateau (14).

2. Dispositif de chargement latéral par basculement selon la revendication 1, **caractérisé en ce que** le siège (28) est équipé de moyens (34) de manoeuvre afin de faire passer ledit siège de la première position vers la seconde position et inversement de la seconde position vers la première position, ceci à vide ou avec la charge C positionnée dans ledit siège.

3. Dispositif de chargement latéral par basculement selon la revendication 2, **caractérisé en ce que** ces moyens (34) de manoeuvre prennent la forme d'au moins un vérin (36), dont le corps (38) est solidaire de la platine et dont la tête (42) de tige est solidaire, de façon articulée, du L, en un point situé sous la branche courte.

4. Dispositif de chargement latéral par basculement selon l'une quelconque des revendications précédentes, **caractérisé en ce qu'**il comprend une paire de jambages (24), ces jambages ayant une longueur et un angle d'inclinaison fixes et se prolongeant en déport, du côté A du chargement de la charge C sur le plateau (14) de l'engin (10) mobile de manutention.

5. Dispositif de chargement latéral par basculement selon l'une quelconque des revendications précédentes, **caractérisé en ce qu'**il comprend deux sièges supplémentaires de part et d'autre du basculeur (26), également pivotants et montés libres en pivotement de façon totalement homothétique à celle du siège (28).
